# EUROPEAN PATENT APPLICATION

(11) **EP 3 588 707 A1**
(43) Date of publication of application: **01.01.2020**
(21) Application number: 18180881.7
(22) Date of filing: 29.06.2018
(51) Int. Cl.: H02B 13/025, H02G 5/10

(54) **A TWO-PHASE COOLING DEVICE FOR AN ENCAPSULATED ELECTRICAL DEVICE**

(71) Applicant: ABB Schweiz AG, 5400 Baden (CH)
(72) Inventor: Hemrle, Jaroslav, 5405 Baden-Dättwil (CH); Sologubenko, Oleksandr, 8906 Bonstetten (CH); Unternaehrer, Peter, 5436 Würenlos (CH); Kaufmann, Lilian, 5413 Birmenstorf (CH)
(74) Representative: Zimmermann & Partner Patentanwälte mbB

(57) **Abstract**

Two-phase cooling device for electrical components comprising: enclosure (1) having volume (2), inner surface (1a), outer surface (1b) for heat dissipation, evaporator (5) thermally contactable with a component to be cooled (3) in volume (2), liquid reservoir (4) for storing cooling fluid (10) in liquid form and collecting condensed cooling fluid (10) from inner surface (1a) of enclosure (1), cooling conduit (6) leading from liquid reservoir (4) to evaporator (5), with cooling conduit having a diameter creating capillary forces to suck cooling fluid (10) liquid reservoir (4) upwards to evaporator (5), wherein volume (2) of enclosure (1) is filled with dielectric insulation gas having a non-condensable component under standard operating conditions of the cooling device, and under operation cooling fluid (10) flows in a cooling cycle (10a) comprising: evaporating from evaporator (5) into volume (2) by heat uptake from component to be cooled, condensing at inner surface (1a) of enclosure (1), flowing into liquid reservoir (4), and flowing back into evaporator (5) via cooling conduit (6) due to capillary forces.

## Description

Aspects of the invention relate to two-phase cooling devices for electrical components with high demand of cooling capacity, for example, switchgears. In particular, aspects of the invention relate to a cooling device with an insulation gas and a cooling fluid with a two-phase cooling cycle. Further aspects relate to a method of cooling an electronic component using the cooling device.

### Technical background:

Thermal management combined with dielectric design is an important aspect of today's size-and cost-optimized electric power devices. Making equipment more compact or increasing its current rating typically increases the demands on cooling. A well-known way of improving the cooling performance while assuring a uniform cooling temperature is evaporative two-phase cooling, where heat removal is associated with liquid-vapor phase transition. The liquid-vapor mixture can simultaneously serve as an electrically insulating medium. This double-purpose application of the fluid puts special requirements on dielectric properties, compared to conventional refrigerant fluids. In case a particular dielectric strength is required as, for example, in case of medium- and high-voltage applications, it is advantageous to add a certain amount of non-condensable gas with high dielectric strength. This approach leads to a fluid mixture potentially providing both required dielectric properties and cooling capacity, while leading to some uncertainty in: I) dielectric performance, since the dielectric strengths of the liquid phase and the gas phase are different, II) the dielectric strength of a mixture of the two may be poorly known; and III) the cooling performance of the mixture, since the presence of the background gas often leads to reduced performance of a two-phase cooling system.

In certain applications, especially devices such as secondary medium voltage switchgear, high emphasis is attributed to maintenance free and reliable operation, ideally over decades. Therefore, it is of importance to develop methods that enable the benefit of evaporative cooling by providing a reliable cooling over a very long time. Hence, an efficient and reliable cooling system is required.

### Summary of the invention

In view of the above, a cooling device according to claim 1, a system according to claim 13 and a method according to claim 15 are suggested.

A two-phase cooling device for electrical components is suggested. The two-phase cooling device comprises: an enclosure having a volume, an inner surface, and an outer surface being configured for heat dissipation; an evaporator, thermally contactable with a component to be cooled in the volume, a liquid reservoir for storing an amount of a cooling fluid in liquid form, wherein the liquid reservoir is adapted to collect condensed cooling fluid flowing down the inner surface of the enclosure, a cooling conduit leading from the liquid reservoir to the evaporator, the cooling conduit having a diameter adapted to create capillary forces causing the cooling fluid to flow in a direction from the liquid reservoir to the evaporator, wherein the volume of the enclosure is filled with a dielectric insulation gas having a non-condensable component under standard operating conditions of the cooling device, and wherein the cooling fluid is configured to be in a cooling cycle in an operational state of the cooling device comprising: evaporating from the evaporator into the volume due to heat uptake from the component to be cooled, condensing subsequently at the inner surface of the enclosure, flowing into the liquid reservoir, and flowing back into the evaporator via the cooling conduit due to capillary forces.

The invention disclosed herein differs from some common methods of two-phase cooling systems, such as heat pipes. For example, in case of heat pipe the 2-phase fluid is enclosed in a mechanically distinct structure forming the evaporator, the condenser and the connecting channels. In the present invention, the electrical component is located in the same volume of the enclosure as the cooling fluid. The cooling fluid is in direct contact with the cooled parts of the electrical component. Additionally, the device is developed specifically for cases in which a mixture of the 2-phase cooling fluid is present together with an insulating gas having at least one non-condensing component. Such mixture of non-condensing gas with the 2-phase cooling fluid is usually strongly undesirable in case of heat pipes. In the present invention it is however a consistent part of the combined cooling and dielectric function of the mixture.

The combination of dielectric insulation gas and liquid cooling fluid suspended therein provides several advantages for the cooling device. An electrical component placed in the enclosure can efficiently be cooled due to a direct heat transfer from the electrical component to the evaporator. When at the same time the dielectric insulation gas, which may for example be SF₆, nitrogen, or air, comprising a non-condensable component under all standard operating conditions including a cold start-up, for example to be non-condensable down to about -30° C, then it can also be ensured that the overall pressure fluctuation in the volume of the enclosure remains low.

According to an embodiment, the cooling cycle is a passive cooling cycle, meaning the fluid is not actively driven by other means than passive forces like natural conversion, gravity and capillary forces. No (electrical) means for actively driving the fluid cycle are present, especially no electrical means like a pump or a fan. Of course, the electrical component produces heat, which heats up the evaporator. This secondary effect of the electrical component should not be understood as an active part of the cooling cycle. Purely passive cooling of hot elements, in particular busbars, such as busbars at high electric potential, is an embodiment of the invention. Hot elements, in particular electrical components, can be positioned inside of a grounded enclosure, where the walls of the enclosure act as a heat sink. The cooling is achieved by evaporation of dielectric fluid in an evaporator in thermal contact with hot elements. A cooling conduit is acting like a wick guiding cooling fluid into the evaporator followed by condensation of the gaseous cooling fluid on the inner surface of the enclosure. The evaporation-condensation cycle assists circulation of the vapor in the enclosure, thus improving electrical insulation efficiency of the gas insulation.

Potential issues occurring in the prior art cooling systems are due to the presence of active mechanical elements (e.g. a pump or similar), such as: wear of moving parts, mechanical pumps may break down, mechanical pumps require regular maintenance, mechanical pumps require dedicated electric current supplies, mechanical pumps generate vibrations and noise.

This invention further suggests a system and a method for cooling an electrical component.

### Brief description of the Figures:

The details will be described in the following with reference to the figures, wherein
Fig. 1 is a schematic cross-sectional view of a two-phase cooling device and an electrical component to be cooled according to an embodiment of the invention;
Fig. 2 is a schematic cross-sectional view of the two-phase cooling device of Fig. 1 illustrating an example of the cooling cycle of the cooling fluid;
Fig. 3 is an illustration of the evaporator according to an embodiment.

### Detailed description of the Figures and of embodiments:

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment can be applied to a corresponding part or aspect in another embodiment as well.

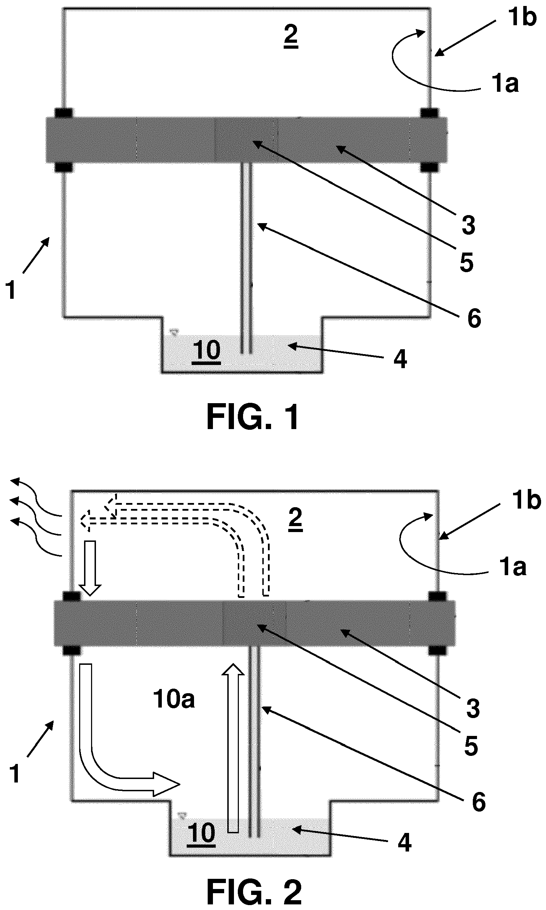

Fig. 1 is a schematic cross-sectional view of a two-phase cooling device 1 according to an embodiment of the invention. The two-phase cooling device 1 comprising: an enclosure 1 having a volume 2, an inner surface 1a, and an outer surface 1b being configured for heat dissipation, an evaporator 5, thermally contactable with an electrical component to be cooled 3 in the volume 2, a liquid reservoir 4 for storing an amount of a cooling fluid 10 in liquid form, wherein the liquid reservoir 4 is adapted to collect condensed cooling fluid 10 flowing down the inner surface 1a of the enclosure 1, a cooling conduit 6 leading from the liquid reservoir 4 to the evaporator 5, the cooling conduit 6 having a diameter adapted to create capillary forces causing the cooling fluid 10 to flow in a direction from the liquid reservoir 4 to the evaporator 5, wherein the volume 2 of the enclosure 1 is filled with a dielectric insulation gas having a non-condensable component under standard operating conditions of the cooling device 1, and wherein the cooling fluid 10 is configured to be in a cooling cycle 10a in an operational state of the cooling device 1 comprising: evaporating from the evaporator 5 into the volume 2 due to heat uptake from the component to be cooled 3, condensing subsequently at the inner surface 1a of the enclosure 1, flowing into the liquid reservoir 4, and flowing back into the evaporator 5 via the cooling conduit 6 due to capillary forces.

The enclosure 1 has or defines a volume 2. The electrical component to be cooled 3 can be placed inside the enclosure 1. The electrical component to be cooled 3 can also be an integral part of the enclosure 1, according to an embodiment. Preferably, the enclosure is grounded during an operational state of the device 1, wherein the electrical component to be cooled 3 is on a potential of at least 1 kV. Hence, the enclosure 1 can be insulated with respect to the electrical component to be cooled 3.

In the embodiment of Figs 1 and 2, the electrical component to be cooled 3 is a busbar 3. However, embodiments and advantages thereof apply to other possible components 3 accordingly. Other component to be cooled 3 may be, for example, bushings, breakers, switches, or disconnectors.

The enclosure 1 and its volume 2 can be hermetically closed. In some embodiments, the electrical component 3 can extend out of the enclosure 1, for example, through a hole. Preferably, the enclosure 1 is sealed against the environment so that the dielectric insulation gas and the cooling fluid 10 is held inside the volume 2 permanently. An access for maintenance can be provided.

The outer surface 1b is preferably configured for heat dissipation. During an operational state of the device 1 the majority of the heat produced in the electrical component 3 is transported to the inner surface 1a of the enclosure 1 and is led or thermally conducted to the outer surface 1b of the enclosure 1, where the heat is dissipated. Heat dissipation can happen passive, for example, by radiation or by natural convection of a medium surrounding the enclosure 1. Heat dissipation can be passively increased by fins. Heat dissipation can also be increased by external cooling means, for example, by fans or cooling liquid pumps. The external heat dissipation at the outer surface 1b of the enclosure 1 is separated from the cooling cycle 10a in that no medium is exchanged between them. Heat dissipation is illustrated in Fig. 2 by the arrows at the outer surface 1b of the enclosure 1.

The two-phase cooling device 1 comprises a cooling fluid 10, which is further characterized below. During an operational state of the device the cooling fluid 10 is present partially in liquid form and partially in gaseous form. In the evaporator 5, liquid cooling fluid 10 evaporates due to the heat of an electrical component 3 which is thermally connected to the evaporator 5. The enthalpy of vaporization cools the evaporator 5 and therefore cools the electrical component 3.

Cooling fluid 10 in gaseous form can condense subsequently at the inner surface 1a of the enclosure 1. The inner surface 1a of the enclosure can comprise a structure and/or means for enhancing condensation, for example, fins. The inner surface can also comprise a structure and/or means for leading the condensed fluid 10 into the liquid reservoir 4. The liquid reservoir 4 is configured for storing an amount of a cooling fluid 10 in liquid form. It can be at least partially located at a low position of the enclosure 1 to collect cooling fluid 10 by gravity.

A cooling conduit 6 leads from the liquid reservoir 4 to the evaporator 5, the cooling conduit 6 having a diameter adapted to create capillary forces causing the cooling fluid 10 to flow in a direction from the liquid reservoir 4 to the evaporator 5. The cooling conduit 6 acts like a wick. Capillary forces and a partial pressure difference caused by the evaporation of the cooling fluid 10 in the evaporator 5 cause the cooling fluid 10 in the cooling reservoir 4 to flow in a direction from the liquid reservoir 4 to the evaporator 5, especially upwards against the gravity. As shown in the embodiment of Figs. 1 and 2 the cooling conduit 6 leads from the liquid reservoir 4 at a lower position to the evaporator 5 at a higher position inside the volume. It is in advantage of the invention that no pump system is required to suck or push the cooling fluid 10 upwards into the evaporator 5.

Fig. 2 illustrates the cooling cycle 10a of the cooling fluid 10 in an operational state of the cooling device 1. The cooling cycle 10a comprises: evaporating from the evaporator 5 into the volume 2 due to heat uptake from the component to be cooled 3, condensing subsequently at the inner surface 1a of the enclosure 1, flowing into the liquid reservoir 4, and flowing back into the evaporator 5 via the cooling conduit 6 due to capillary forces. Cooling fluid 10 in gaseous form is indicated by dashed arrows and cooling fluid 10 in liquid form is indicated by continuous arrows. According to an embodiment the liquid reservoir 4 is passively collecting the condensed cooling fluid 10 due to gravity forces affecting the cooling fluid 10 and the cooling cycle 10a is a passive cooling cycle 10a. No means, especially no electric means for example pumps or fans or similar, are actively driving the cooling fluid 10. It is driven by passive forces like convection, gravity and capillary forces.

According to an embodiment, the liquid reservoir 4 is passively collecting the condensed cooling fluid 10 due to gravity forces affecting the cooling fluid 10, and the cooling cycle 10a is a passive cooling cycle 10a. Figs. 1 and 2 illustrate the liquid reservoir 4 being located at a lower position inside the enclosure 1 for passively collecting the condensed cooling fluid 10 by gravity. The cooling conduit 6 can lead essentially vertical from the liquid reservoir 4 at a lower position to the evaporator 5 at a higher position.

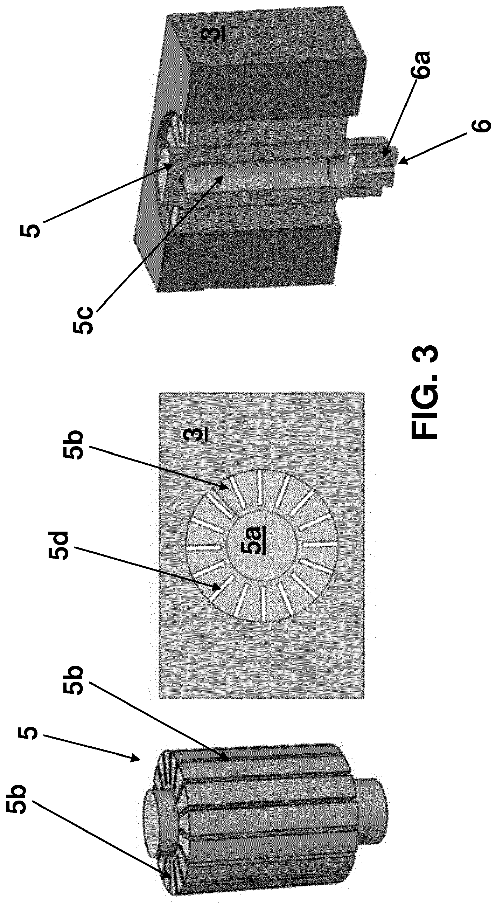

Fig. 3 illustrate an embodiment of the evaporator 5 in detail. According to an embodiment the evaporator 5 comprises a body 5a thermally contactable with a component to be cooled, the body 5a having an outer porous surface 5b, wherein pore-openings in the porous surface 5b are in a fluid connection with the cooling conduit 6, so that cooling fluid 10 in liquid form evaporates from the pore-openings of the porous surface 5b.

A heat connection between the body 5a and the component to be cooled 3 can be achieved, for example, by a direct contact. As shown in Fig. 3, the body 5a can be partially inserted into the component to be cooled 3, thereby creating a direct thermal conduction between the body 5a and the component 3. According to an embodiment, the component 3, especially the busbar 3, comprises a hole, and the evaporator 5 is at least partially inserted in the hole of the component, especially the busbar.

According to an aspect, the evaporator 5 comprises a chamber 5c in fluid connection with the cooling conduit 6 as shown, for example, in Fig. 3, wherein the fluid flows in a fluid flow direction from the cooling conduit 6 into the chamber 5c, wherein the chamber 5c has a larger extension or diameter in a direction perpendicular to the flow direction of the cooling fluid than the cooling conduit 6. Due to the larger extension or diameter, capillary forces are reduced or nearly disappear inside the chamber 5c.

In chamber 5c of the body 5a, a low partial pressure is generated by evaporation occurring at the outer porous surface 5b. The low partial pressure comparted to a pressure in volume 2 outside the chamber 5a causes a wick-effect with the cooling conduit 6 acting as a wick. Cooling fluid flows from the liquid reservoir 4 into the chamber 5a through the cooling conduit 6 due to capillary forces. The chamber 5a acts as a wick compensation chamber.

The cooling conduit 6 can be inserted into the body 5a or the chamber 5c of the body 5a, respectively, with a fitting 6a providing a hermetic connection between the chamber 5c and one end of the cooling conduit 6.

The cooling conduit 6 can comprise a single tube or several parallel tubes adapted in size to generate a capillary force as described above. Depending on the material and the length, the cooling conduit 6 can also comprise several tubes in a row. The two-phase cooling device can also comprise several cooling conduits 6 depending on the size of the two-phase cooling device and the required cooling power. Since the diameter of the cooling conduit 6 is limited in that capillary forces are necessary, the fluid flow through one tube of the cooling conduit 6 may be limited. The cooling conduit 6, or one tube of the cooling conduit 6, respectively, can have an inner diameter of, for example, 5 micrometers to 20 micrometers, depending on the properties of the cooling fluid.

According to an embodiment, the outer porous surface 5b of the body 5a of the evaporator 5 comprises ridges or trenches 5d extending from the outer porous surface 5b into the body 5a. The surfaces of the ridges or trenches 5d increase the total surface area of the outer porous surface 5b of the body 5a. Additionally, as shown in Fig. 3, the ridges or trenches 5d can extend from an upper surface of the body 5a, along the body 5a and up to a lower surface of the body 5a, thereby creating a duct. Such a duct can create a chimney effect due to a difference of air density between the upper on the lower surface of the body resulting from temperature, partial pressure and moisture differences. Ridges or trenches 5d can extend parallel to the central axis of the body 5a or vertical to the ground, respectively. In the embodiment of Fig. 3, the ridges or trenches 5d form a closed duct together with the electrical component 3. The duct has two openings, one on each side of the body 5a, for creating a chimney effect which increases the efficiency of cooling. According to an aspect of the invention, the size of the ridges or trenches 5d is significant larger than the size of the pore-openings on the porous surface 5b. The ridges or trenches 5d do not extend into the chamber 5c.

According to an embodiment, the body 5a has an essentially cylindrical form and the chamber 5c is located essentially on a central axis of the body 5a. Cooling fluid inside the chamber 5c is therefore equally drawn in each radial direction from the central axis of the body 5a. Preferably, the central axis of the cylinder extends vertical, which is also shown in Figs. 1 to 3.

According to an embodiment, the evaporator 5, especially the body 5a, comprises or consists of a porous plastic material, in particular a polyethylene.

The body 5a of the evaporator 5 can have pores with a nominal pore size of about 1 µm to about 20 µm, and/or a porosity of about 20% to about 50%. The pore size depends on the properties of the cooling fluid.

According to an aspect of the invention, the body 5a of the evaporator 5 has a thermal conductivity which is adapted to be low enough in order to prevent an undesired boiling of the cooling fluid 10 inside the chamber 5c, due to thermal energy from the component 3 to be cooled, under all standard operating conditions. Typically, the thermal conductivity of the body 5a from a contact surface with the component 3 to the chamber 5c is below 1 W/mK.

The cooling device can comprise multiple evaporators 5 and cooling conduits 6 depending on the size and the heat produced by the electrical component 3.

### Standard operating conditions

When referring to standard operating conditions, the two-phase cooling device for electrical components can differ in different embodiments. For example, typical temperatures inside the enclosure are between 40°C and 120°C. The evaporator may have a higher temperature than the average temperature of the dielectric insulation gas and cooling fluid mixture inside the volume of the enclosure. The pressure typically can be in a range of 0.5 bar to 2 bar. Standard operating conditions should be considered as conditions intended by construction of the cooling device.

Next, operation parameters for the cooling device are discussed. Typical conditions, for example, in medium voltage switchgear result in thermal losses generated by different hot elements, like electrical components (e.g. busbars) at densities of about 1 kW/m³ to 10 kW/m³. The cooling device is adapted for transferring this amount of heat flux from the electrical components to and across the enclosure.

Thus, according to an embodiment, a cooling power of 20 W to 100 W per evaporator is provided.

In a comparative example, heat is removed by passive heat transfer across the enclosure wall (by passive natural gas cooling on both sides of the wall). For this heat removal, a typical overall heat transfer coefficient is 20-50 W/m²K. For cooling through the top of the housing having a surface area of 0.5 m², with fins effectively tripling the effective heat exchanger surface area to 1.5 m², removal of 1500 W thus requires a large temperature difference across the housing wall of about 20-40 K or °C.

According to an embodiment, the heat transfer can be improved by condensation of the cooling fluid at the inner side of the enclosure. Due to the condensation, the heat transfer coefficient is increased to about 200-500 W/m²K (the lower limit depending on the amount of non-condensable gas which limits the cooling efficiency). Thus, removal of 1500 W is possible for a temperature difference across the enclosure wall of only a few K or °C, even when using smooth internal surfaces without fins. Because also the side walls are available for heat transfer, even without fins an effective condensation area of 1 m² - 3 m² can be assumed.

The inner surface of the enclosure may comprise a condensation-enhancing structure, such as a finned cooling surface and/or a convection channel. The inner housing wall surface may comprise a condensate channel for guiding the condensate towards a liquid reservoir located at a bottom portion of the enclosure in which cooling fluid is stored in liquid form.

The removal of the heat from the outside of the housing would usually present a larger thermal resistance similar to the comparative example mentioned above. Therefore, according to an embodiment, the outside surface configured for heat dissipation of the enclosure is enlarged, e.g. by fins, vertical walls or similar passive cooling structures, which results in lower thermal resistance. As no particular dielectric requirements are imposed on the outside of the walls, there are no practical dielectric limitations imposed on the design of such cooling structures. According to a further aspect, an active or passive cooling device such as a fan or a thermosyphon are provided to the outside surface of the housing, which allows removing heat even more efficiently.

### Cooling fluid and insolation gas

First, general aspects regarding the dielectric insulation gas (background gas) and the cooling fluid are described. The combination of at least partially non-condensable, dielectric insulation gas and a cooling fluid cycle creates a 2-phase cooling system for the two-phase cooling device.

The mixture of the dielectric insulation gas and the vapor cooling fluid is electrical insulating under standard operating conditions of the cooling device.

The dielectric insulation gas has at least one non-condensable component, which is therefore configured to be in a gaseous form at operating temperatures, for example between -30 °C and above. According to an aspect, the dielectric gas can comprise a single or multiple components. For example, the dielectric insulation gas can comprise a component selected from the group consisting of: SF₆, CO₂, O₂, N₂, H₂, air, N₂O, a hydrocarbon, in particular CH₄, and mixtures thereof. A perfluorinated or partially hydrogenated organofluorine may be partially miscible with the dielectric insulation gas.

Generally a cooling fluid and an amount of cooling fluid compared to the insolation gas are preferably chosen with a saturation curve being such, that within the full range of operating temperatures of the cooling device a reasonable total operating pressure of the volume is obtained. A reasonable total operating pressure is, generally, in the range from a few mbar to a few bar, for example 5 mbar to 10 bar, especially 0.5 bar to 2 bar, and most preferred in the range of 0.6 bar to 1.3 bar. The total pressure results from the partial pressure of the cooling fluid together with the partial pressure of dielectric insulation gas. A preferred range of the partial pressure of the dielectric insulation gas, according to an embodiment, is about 0.7 bar to about 1.1 bar. To ensure dielectric strength across the temperature range of operation, the dielectric insulation gas is filled to pressures similar or only slightly below the typical pressures used for purely gas insulated and gas cooled devices. The total pressure limit of the dielectric insulation gas can, for example be 2 bar or 1.3 bar.

According to an embodiment, during operational states of the cooling device the non-condensable component of the dielectric insulation gas has a partial pressure of at least 40%, preferably at least 60%, of the atmosphere of the volume 2 comprising the dielectric insulation gas and the cooling fluid 10 in gaseous phase.

According to an embodiment, the cooling fluid 10 is an organofluorine with 4 to 6 C atoms in the backbone, in particular a Fluoroketone or a Hydrofluoroether (HFE), for example a Hydrofluorether (HFE) with the formula C₇F₁₅OC₂H₅.

According to an embodiment, the cooling fluid comprises a Hydrofluorether and/or a Hydrofluoroketone. Hydrofluoroethers are non-flammable, thermally stable, non-ozone depleting, and have a very low global warming potential. Particularly, the cooling fluid can comprise Hydrofluoroether (HFE), for example HFE7500 by Novec fluids of 3M©. Alternatively, the cooling fluid can comprise HFE7300, HFE7700, or C7 or similar fluids with higher molecular weight, or combinations thereof.

The boiling point of the cooling fluid 10 can be, according to an embodiment, from about 30°C to about 80°C at 1 atm.

The cooling fluid has to be chosen depending on the cooling conduit 6 and the evaporator 5 or vice versa. The cooling fluid shall have a certain viscosity and surface tension to create a capillary effect depending, for example, on the diameter of the cooling conduit 6. Typical values for the viscosity are, for example, at least 0.5 cP (centipoise, 1 Poise = 1 g/(cm s)); and for the surface tension of at least 10 mN/m.

The dielectric strength of the dielectric insulation gas and the cooling fluid shall therefore be ensured fully by filling gas-insulating gases at suitable pressures; for example, if the total pressure limit of a device is 2 bar, the device can be filled to nearly 1.1 bar or 1.2 bar with the insulation gas.

### System and method

An electrical system is disclosed. The system comprises an electrical component and an embodiment of the two-phase cooling as described above, wherein the electrical component is at least partially located in the enclosure 1 and wherein under standard operating conditions the electrical component produces heat and the evaporator 5 is thermally contacted with the component.

According to an embodiment, the component 3, especially the busbar 3, comprises a hole, and the evaporator 5 is at least partially inserted in the hole. Preferably, a direct contact between the evaporator 5 or its body 5a, respectively, is achieved and the evaporator 5 is thermally connected, e.g. by thermal conduction, to the component 3, especially the busbar 3.

The component 3 to be cooled can be under standard operating conditions on a potential of at least 1 kV, or least 30 kV or even at least 52 kV.

A method for passively cooling an electrical component 3 is disclosed. The method comprises: providing an electrical system as describes above; operating the component to be cooled 3, evaporating a cooling fluid 10 in the evaporator 5 which is in thermal contact to the component to be cooled 3, transporting the evaporated cooling fluid 10 via natural convection towards an inner surface 1a of the enclosure 1 and condensing the cooling fluid 10 at the inner surface 1a, thereby transferring thermal energy to the enclosure 1, back flowing the cooling fluid 10 into the liquid reservoir 4, and flowing the cooling fluid 10 into the evaporator 5 via the cooling conduit 6 due to or driven by capillary forces.

## Claims

1. A two-phase cooling device for electrical components, comprising:
- an enclosure (1) having a volume (2), an inner surface (1a), and an outer surface (1b) being configured for heat dissipation,
- an evaporator (5), thermally contactable with a component (3) to be cooled in the volume (2),
- a liquid reservoir (4) for storing an amount of a cooling fluid (10) in liquid form, wherein the liquid reservoir (4) is adapted to collect condensed cooling fluid (10) flowing down the inner surface (1a) of the enclosure (1),
- a cooling conduit (6) leading from the liquid reservoir (4) to the evaporator (5), the cooling conduit (6) having a cross-section, in particular diameter, adapted to create capillary forces causing the cooling fluid (10) to flow from the liquid reservoir (4) to the evaporator (5), wherein the volume (2) of the enclosure (1) is filled with a dielectric insulation gas, having a non-condensable component under standard operating conditions of the cooling device, and wherein the cooling fluid (10) is configured to be in a cooling cycle (10a) in an operational state of the cooling device, the cooling cycle (10a) comprising: evaporating from the evaporator (5) into the volume (2) due to heat uptake from the component to be cooled, condensing subsequently at the inner surface (1a) of the enclosure (1), flowing into the liquid reservoir (4), and flowing back into the evaporator (5) via the cooling conduit (6) due to capillary forces.

2. The two-phase cooling device of claim 1, wherein the evaporator (5) comprises a body (5a) thermally contactable with a component to be cooled, the body (5a) having an outer porous surface (5b) wherein pore-openings in the porous surface (5b) are in a fluid connection with the cooling conduit (6), so that cooling fluid (10) in liquid form evaporates from the pore-openings of the porous surface (5b).

3. The two-phase cooling device of any one of the preceding claims, wherein the liquid reservoir (4) is passively collecting the condensed cooling fluid (10) due to gravity forces affecting the cooling fluid (10), and wherein the cooling cycle (10a) is a passive cooling cycle (10a).

4. The two-phase cooling device of any one of the preceding claims, wherein the evaporator (5) comprises a chamber (5c) in fluid connection with the cooling conduit (6), wherein the fluid flows in a fluid flow direction from the cooling conduit (6) into the chamber (5c), wherein the chamber (5c) has a larger cross section, in particular diameter, in a direction perpendicular to the flow direction of the cooling fluid than the cooling conduit (6).

5. The two-phase cooling device of claim 4, wherein the body (5a) of the evaporator (5) has an essentially cylindrical form and wherein the chamber (5c) is located essentially on a central axis of the body (5a).

6. The two-phase cooling device of any one of the preceding claims, wherein the outer porous surface (5b) of the body (5a) of the evaporator (5) comprises ridges or trenches (5d) extending from the outer porous surface (5b) into the body (5a).

7. The two-phase cooling device of any one of the preceding claims, wherein the body (5a) of the evaporator (5) comprises or consists of a porous plastic material, in particular a polyethylene.

8. The two-phase cooling device of any one of the preceding claims, wherein a material of the evaporator (5), especially of the body (5a) of the evaporator (5), has pores with a nominal pore size of about 1 µm to about 20 µm, and/or a porosity of about 20% to about 50%.

9. The two-phase cooling device of any one of the preceding claims, wherein the cooling fluid (10) is an organofluorine compound with 4 to 6 C atoms, in particular a Fluoroketone or a Hydrofluoroether.

10. The two-phase cooling device of any one of the preceding claims, wherein the dielectric insulation gas comprises a component selected from the group consisting of: SF₆, CO₂, O₂, N₂, H₂, air, N₂O, a hydrocarbon, in particular CH₄, and mixtures thereof.

11. The two-phase cooling device of any one of the preceding claims, wherein the body (5a) of the evaporator (5) has a thermal conductivity which is adapted to be low enough in order to prevent an undesired boiling of the cooling fluid (10) inside the chamber (5c), due to thermal energy from the component to be cooled, under all standard operating conditions.

12. The two-phase cooling device of any one of the preceding claims, wherein during operational states of the cooling device the non-condensable component of the dielectric insulation gas has a partial pressure of at least 40%, preferably at least 60%, of the atmosphere of the volume (2) comprising the dielectric insulation gas and the cooling fluid (10) in gaseous phase.

13. An electrical system comprising an electrical component and a two-phase cooling device of any one of the preceding claims, wherein the electrical component (3) is at least partially located in the enclosure (1) and wherein under standard operating conditions the electrical component (3) produces heat and the evaporator (5) is thermally contacted with the component (3).

14. The electrical system of claim 13, wherein the component (3) to be cooled is under standard operating conditions on an electrical potential of at least 1 kV, or least 30 kV or even at least 52 kV.

15. A method for passively cooling an electrical component, comprising:
- providing an electrical system according to any one of the claims 13 to 14;
- operating the component to be cooled (3),
- evaporating a cooling fluid (10) in the evaporator (5) which is in thermal contact with the electrical component to be cooled (3),
- transporting the evaporated cooling fluid (10) via natural convection towards an inner surface (1a) of the enclosure (1) and condensing the cooling fluid (10) at the inner surface (1a), thereby transferring thermal energy to the enclosure (1),
- back flowing of the cooling fluid (10) into the liquid reservoir (4), and
- flowing of the cooling fluid (10) into the evaporator (5) via the cooling conduit (6) due to capillary forces.
